# EUROPEAN PATENT APPLICATION

(11) **EP 1 437 648 A2**
(43) Date of publication of application: **14.07.2004**
(21) Application number: 03028648.8
(22) Date of filing: 15.12.2003
(51) Int. Cl.: G06F 9/44

(54) **Active content wizard**

(30) Priority: 07.01.2003 US 337745
(71) Applicant: Microsoft Corporation, Redmond,WA 98054 (US)
(72) Inventor: Bala, Aravind, Bellevue Washington 98004 (US)
(74) Representative: Grünecker, Kinkeldey, Stockmair & Schwanhäusser Anwaltssozietät

(57) **Abstract**

The invention describes a system for authoring and executing wizards. New wizards are created either from existing structured content like HELP files, KB articles etc or are created using simple authoring tools that target authors with expertise of applications (not requiring development skills). The wizards work on top of existing GUI using existing GUI automation modules, and can either teach users how to perform tasks or perform tasks on their behalf. Further, the wizards authored can also dialog with the user, helping them make choices, and can access system/user state to perform conditional actions. The wizards are updated through an optional feedback system.

## Description

### BACKGROUND OF THE INVENTION

There have been several attempts to enable natural language/speech based interaction with computers. The results of these attempts have so far been limited. This is due to combination of technology imperfections, lack of non-intrusive microphone infrastructure, high authoring costs, entrenched customer behaviors and a competitor in the form of the GUI (Graphical user interface), which offers high value for many tasks. The present invention focuses on two of these limitations, closer integration with the GUI and reduced authoring. The Graphical User Interface (GUI) is a widely used interface mechanism. GUI's are very good for positioning tasks (e.g. resizing a rectangle), visual modifier tasks (e.g. making something an indescribable shade of blue) or selection tasks (e.g. this is the one of a hundred pictures I want rotated). GUI.is also good for speedy access to quick single step features. An applications GUI is a useful toolbox that is organized from a functional perspective (e.g. organized into menus, toolbars, etc) rather than a task oriented perspective (e.g. organized by higher level tasks that users want to do: e.g. "make my computer secure against hackers").

However, GUIs present many problems to the user as well. Using the toolbox analogy, a user has difficulty finding the tools in the box or figuring out how to use the tools to complete a task. An interface described by single words, tiny buttons and tabs forced into an opaque hierarchy doesn't lend itself to the way people think about their tasks. The GUI requires the user to decompose the tasks in order to determine what elements are necessary to accomplish the task. This requirement leads to complexity. Aside from the complexity issue, it takes time to assemble GUI elements (i.e. menu clicks, dialog clicks, etc). This can be inefficient and time consuming even for expert users.

One existing mechanism for addressing GUI problems is a written help procedure. Help procedures often take the form of Help documents, PSS (Product support services) KB (Knowledge base) articles, and newsgroup posts, which fill the gap between customer needs and GUI problems. They are analogous the manual that comes with the toolbox, and have many benefits. These benefits include, by way of example:
1) They are easy to author even for non-technical authors.
2) They are easy to update on a server so connected users have easy access to new content, and
3) They teach the GUI putting users in control' of solving problems.

However, Help documents, PSS KB articles and newsgroups have their own set of problems. These problems include, by way of example:
1) Complex tasks require a great deal of processing on the user's part. The user needs to do the mapping from what is said in each step to the GUI.
2) Troubleshooters, and even procedural help document, often include state information that creates complex branches within the help topic, making topics long and hard to read and process for the user. Toolbars may be missing, and may need to be turned on before the next step can be taken. Troubleshooters often ask questions about a state that is at best frustrating (because the troubleshooter should be able to find the answer itself) and at worst unanswerable by non-experts.
3) There are millions of documents, and searching for answers involves both a problem of where to start the search, and then how to pick the best search result from the thousands returned.
4) There is no shared authoring structure. Newsgroup posts, KB articles, troubleshooters and procedural Help documents all have different structures and authoring strategies, Yet they are all solving similar problems.

Another existing mechanism for addressing GUI problems is a Wizard. Wizards were created to address the weaknesses of GUI and written help procedures. There are now thousands of wizards, and these wizards can be found in almost every software product that is manufactured. This is because wizards solve a real need currently not addressed by existing text based help and assistance. They allow users to access functionality in a task-oriented way and can assemble the GUI or tools automatically. Wizards allow a program manager and developer a means for addressing customer tasks. They are like the expert in the box stepping the user through the necessary steps for task success. Some wizards help customers setup a system (e.g. Setup Wizards), some wizards include content with features and help customers create content (e.g. Newsletter Wizards or PowerPoint's AutoContent Wizard), and some wizards help customers diagnose and solve problems (e.g. Troubleshooters).

Wizards provide many benefits to the user. Some of the benefits of wizards are that:
1) Wizards embody the notion of a "task" It is usually clear to the user what the wizard is helping them accomplish. With step-by-step pages, it is easy for a user to make choices and in the case of well designed wizards the incidence of visual overwhelm of the user is often reduced.
2) Wizards automatically assemble and interact with the underlying features of the software and include the information or expertise needed for customers to make choices. This saves the user time in executing the task.
3) Wizards automatically generate content and can save users time by creating text and planning layout.
4) Wizards are also a good means for asking questions, getting responses and branching to the most relevant next question or feature.

However, wizards too, have their own set problems. Some of the problems with wizards include, by way of example:
1) There are many more tasks people try to accomplish than there are wizards for accomplishing them.
2) Wizards and IUI (Inductive User Interfaces) do not teach customers how to use underlying GUI and often when the Wizard is completed, users are unsure of where to go next.
3) The cost of authoring of wizards is still high and requires personnel with technical expertise (e.g. software developers) to author the Wizard.

### SUMMARY OF THE INVENTION

The present invention addresses some of the problems of Wizards, Help, Knowledge base articles and troubleshooters by allowing for an easy way to author thousands of tasks (or wizards), and either integrate and teach the GUI to the user or execute the task on behalf of the user.

The present invention can be implemented to include a wide variety of features. In one embodiment a User interface in accordance with the invention takes customers through a series of atomic steps to perform a task. The user interface can sit on top of and interact with an existing user interface (UI). The user interface 'can include toolbar buttons for quick unfettered access to common commands, a menu system for setting properties, and even a box that organizes some features (e.g. a dialog box). The notion of "tasks" is layered onto this user interface (or "toolbox") in a way that helps users quickly assemble the tools, by either automatically assembling the tools to perform the task for the user, or by teaching the user how to do it. The decision, when to automatically perform the task and when to teach, can be intimately mingled with the request by the user such as whether it is typed or spoken, the type of task, the expertise level of the user, the personality type of the user, whether the user has disabilities (such as a user with RSI (Repetitive Stress Injury)), and the frequency of use of a given software program and task.

Moving the development of tasks or wizards from the developer to a non-technical audience requires abstracting from the underlying object model. Therefore, in accordance with another embodiment, the present invention provides a framework for connecting to the existing GUI.

In one example, the architecture of the present invention uses GUI automation technology to connect to the GUI. Examples of GUI automation modules are accessibility modules that ship with currently available operating' system software, such as Microsoft Active Accessibility from Microsoft Corporation of Redmond, Washington. Also, the script used by the present invention can be stored in a format, such as XML, that is 'easily understood by non-technical users.

A percentage of Help, KB articles and newsgroup posts need more information about the software and system state, before proposing a solution to a given problem, or before indicating how to perform a requested task. In the past, this state check was often left to the user. For example, an exemplary state check is "if you are connected to a network do this..." or "if you have printer sharing enabled, do this..." The architecture of one embodiment of the present invention allows authors to specify such branching conditions based on user/software/machine state. At runtime, an interpreter in the present invention determines these state conditions automatically, and makes the appropriate decisions as specified by the author.

The main components of the ACW platform are ACW scripts, ACW authoring tools, ACW interpreter and the ACW feedback system.

Scripts, in accordance with one embodiment, are the structured representation of a wizard that implements features of the invention. This representation can contain information that is used by the interpreter to execute the instructions, as well as natural language descriptions of the different steps in the task to be performed. There can be different types of instructions in an script file. Some instructions are executed against the GUI, some instructions are for checking user/machine state, and some for dialoging with the user. In one embodiment of a script, the language used to represent the script is XML.

Authoring tools, in accordance with one embodiment, are tools that users/authors of the system use to author scripts. These include tools to import existing Help/KB article/newsgroup content into scripts as well as easy authoring tools to create new scripts.

While the authoring tools do not form part of the invention they are described briefly for the sake of completeness. One example of an authoring tool is a tool that monitors the actions the author performs on the computer, and generates a script from it. For example to create a script on "How to change your path variable in Windows" the author presses the "Start recording" button on the tool, then the user clicks on the "start" button, then on "Control Panel", then on "system", then on the "Advanced" Tab. Then the user clicks on "Environment variables", chooses "Path", and then clicks on the "Edit" button. At this point, the end-user must record their changes. So, the author changes the mode on the tool to "User choice", and continues to finish the task. At the end, the user presses the "Stop recording" button on the authoring tool. The Authoring tool then generates a script that details this task. The script contains a description of the task in a natural language such as English, as well as information that is required by the interpreter to either teach a user how to perform this task or to do it for them. Further, the tool allows for editing the natural language description by the author.

The interpreter module, in accordance with one embodiment, executes the instructions in a script file. The interpreter can support multiple modes of execution like executing instructions on behalf of the user, or walking the user through the set of instructions. Further, the interpreter can be controlled by any input modality, such as keyboard, mouse/speech etc. The interpreter can include several modules, and is extensible (i.e. Modules for new functionality can be added to it). One example of a module in the interpreter is a GUI automation module. This module can execute commands against the GUI. Another example is a module that can execute instructions against the "Registry". Other modules can be used as well.

### BRIEF DESCRIPTION OF THE DRAWINGS

FIG. 1 is a block diagram of one exemplary environment in which the present invention can be used.
FIG. 2 is a block diagram of one embodiment of the present invention, illustrating a natural user interface using the ACW platform.
FIG. 3 shows a block diagram illustrating the ACW Interpreter according to one embodiment of the present invention.
FIG. 4 is a flow diagram illustrating the execution of a selected task according to one embodiment of the present invention.
FIGS. 5A-5J are a series of screen shots illustrating the execution of the ACW Interpreter on a particular ACW script.
FIG. 6 is a flow diagram illustrating the creation of an ACW script.

### DETAILED DESCRIPTION OF ILLUSTRATIVE EMBODIMENTS

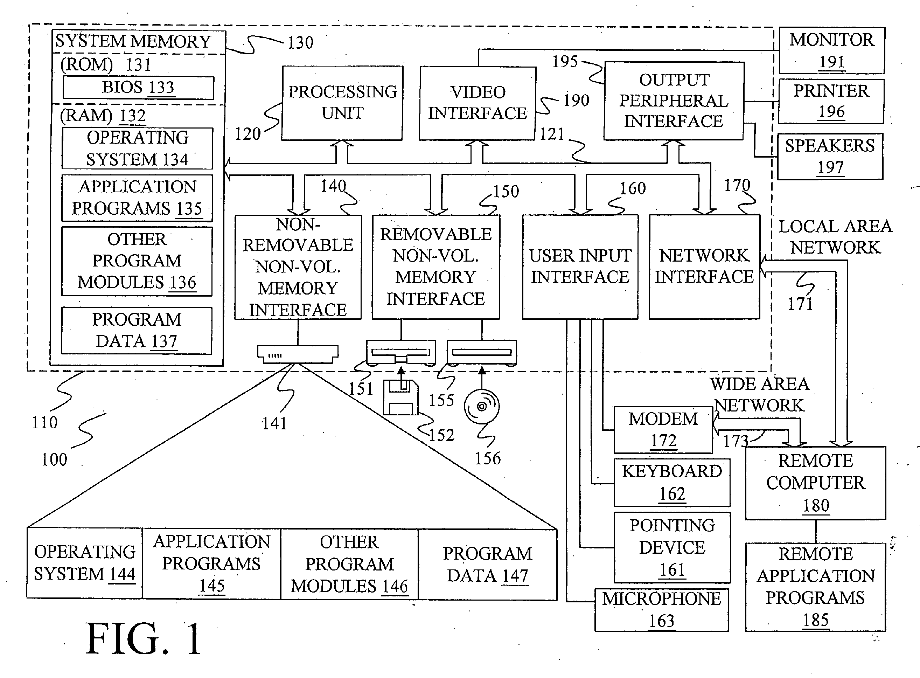

FIG. 1 illustrates an example of a suitable computing system environment 10.0 on which the invention may be implemented. The computing system environment 100 is only one example of a suitable computing environment and is not intended to suggest any limitation as to the scope of use or functionality of the Invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic 'disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Interne. The modem 172, which may be internal or external, may be connected to the system bus 121 via the user input interface 160, or other appropriate mechanism. In a networked environment, program modules depicted relative' to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

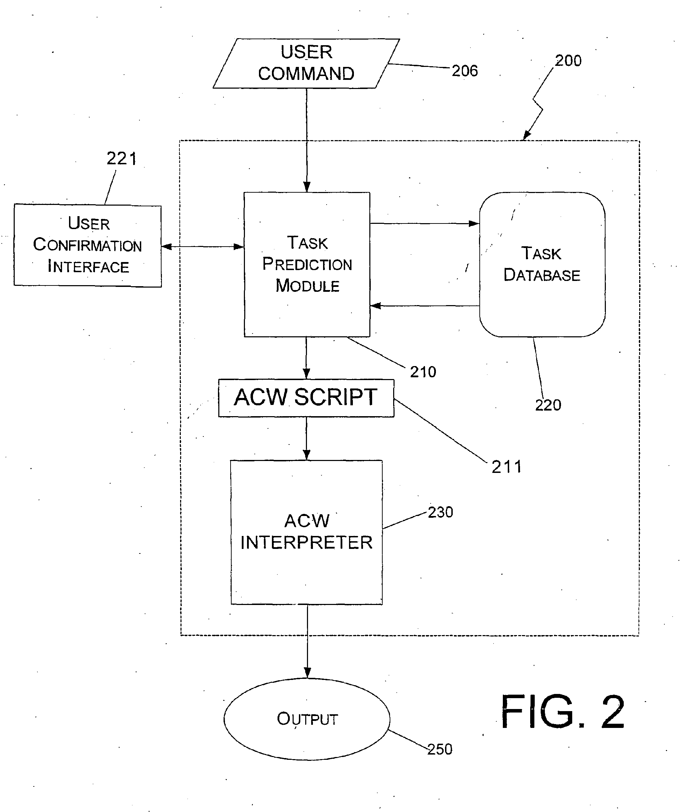

FIG. 2 is a block diagram of a natural user interface module or system 200 that uses one embodiment of the present invention. Natural user interface 200 comprises of three components. These components include a task prediction module 210, a task database 220 and active content wizard (ACW) Interpreter 230. Natural user interface 200 also receives an input user command or query 206 from a user, and provides an output 250. The query represents a task that the user desires to perform. Input command 206 is in one embodiment a natural language input. However, other inputs can be used for the input command 206 such as a Boolean input, a scroll bar, a list of words, or a speech input.

Task prediction module 210 is configured to determine a task associated with the inputted user command 206. In one embodiment, task prediction module 210 leverages an existing help search module to search task database 220 to find matches to the user command 206. Task prediction module 210 receives a user input command 206 and converts and/or processes command 206 into a format that allows for searching of task database 220. Module 210 then executes a search against task database 220 to obtain information associated with the task represented by command 206.

Following the search, task prediction module 210 receives the results of the search from task database 220 and provides one or more task documents from database 220 that likely match the user query 206, to the user through an appropriate interface 221. In one embodiment, module 210 simply selects one of the task documents as a selected task. In another embodiment, the user can select, through interface 221, one of those documents as a selected document. Task prediction module 210 then returns an active content wizard (ACW) script corresponding to the selected task to the ACW Interpreter 230. It should be noted that task prediction module 210 has been described as a conventional information retrieval component. However, other methods can be used to determine the desired task represented by user command 206. By way of example, any other well-known information retrieval technique, such as pattern or word matching, context free grammars (CFGs) for speech support, or other classifier such as support vector machines and Naive Bayesian Networks.

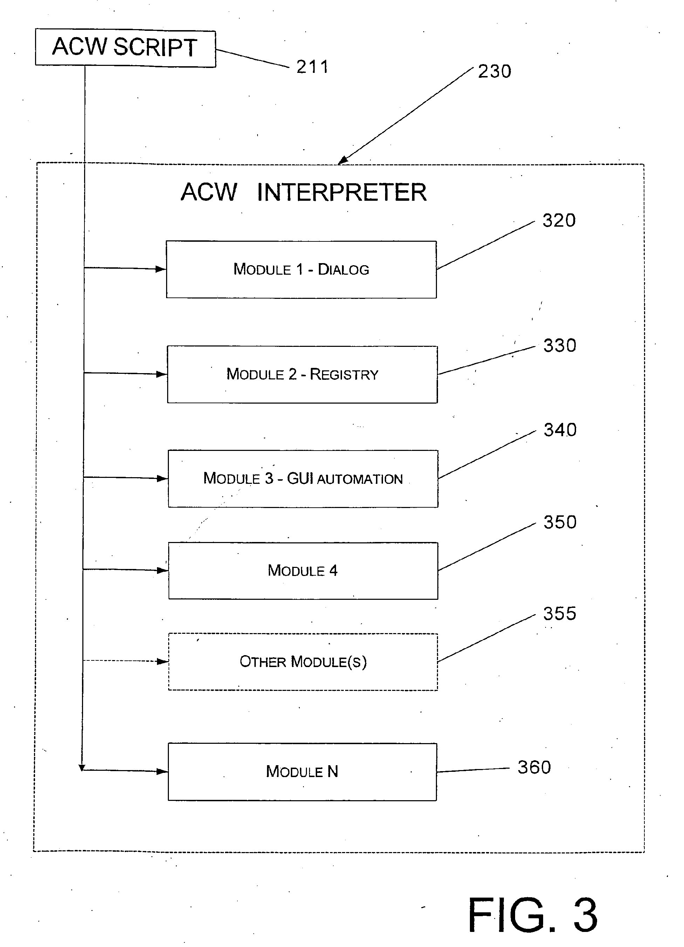

FIG. 3 is a block diagram illustrating the ACW Interpreter 230 illustrated in FIG. 2. The ACW Interpreter 230 includes a Dialog module 320, Registry module 330 and GUI Automation module 340. Each module is capable of 'executing a specific type of step detailed in an ACW script 211 provided to the ACW Interpreter 230. However, ACW Interpreter 230 can be modified to contain additional modules or different modules as well, and can be periodically updated with new or different modules. By way of example one embodiment GUI Automation module 340 is implemented using Microsoft Windows UI Automation.

ACW interpreter 230 is a computer program configured to execute the atomic steps for the task selected by the user. In one embodiment ACW interpreter 230 contains a GUI Automation module implemented using Microsoft User Interface Automation also by Microsoft Corporation. This module simulates user inputs, such as keyboard key depressions, mouse clicks, mouse wheel rotations, etc. However, the GUI automation module of ACW interpreter 230 can be implemented using any application that is able to programmatically navigate a graphical user interface and to perform and execute commands on the user interface.

ACW interpreter 230 thus executes each of the atomic steps associated with a selected task in order. For instance, when the task requires the user to click a button on the GUI to display a new menu or window, ACW interpreter 230 uses the GUI automation module to locate the button on the display device 191 (such as a monitor), clicks the button, and then waits for the new window to show up on the display device. The type/name of the window expected is detailed in the ACW script file 211.

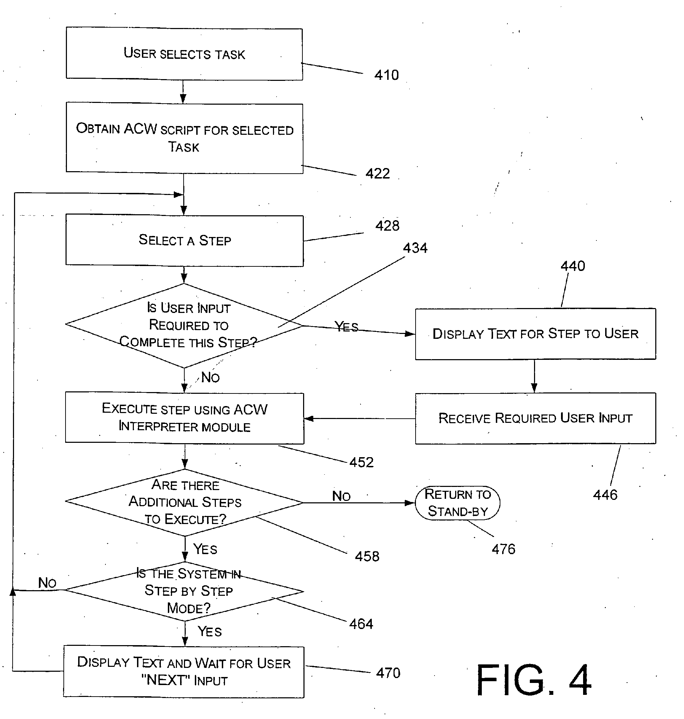

FIG. 4 is a flow diagram illustrating the execution of an ACW script selected in system 200 according to one embodiment of the present invention. At 410, in response to a user command 206, task prediction module 210 identifies and presents to the user a set of possible tasks, and the user selects a task from the set. The task could be selected by any mechanism such as searching for a task, using speech commanding, or choosing from a list of tasks. Module 210 then obtains the ACW script 422 corresponding to the chosen task.

At 428, system 200 selects the first step in the number of atomic steps to be executed by the ACW Interpreter 230. At 434, the system 200 determines whether a user input is required to complete this particular atomic step. If user input is required to complete the step, system 200 displays, at 440, the particular step to the user. The display can be a window on display device 191 requesting an input, or it can be the GUI associated with the particular atomic step. For example, following displaying of the text for that particular step system 200 waits, and does not advance to the next atomic step until it receives the required user input at 446. The system can also display any additional information that is useful to the user in making a decision, such as related information.

Following receipt of the required input, or if no such input is required, system 200 proceeds to execute the current atomic step at 452. At step 458, system 200 looks ahead to see whether there is another atomic step to be executed for the selected task. If there are additional atomic steps to execute, system 200 checks, at 464, to see if the user has selected a step-by-step mode. If so, system 200 executes each individual atomic step only after it receives an input from the user indicating that the user is ready to advance to the next atomic step in the list of atomic steps. This input is received at 470. If system 200 is not in step-by-step mode, the system returns to step 428 and executes the next step in the list of atomic steps as discussed above. If at step 458 there are no additional atomic steps to execute, system 200 had finished executing the desired task at step 476.

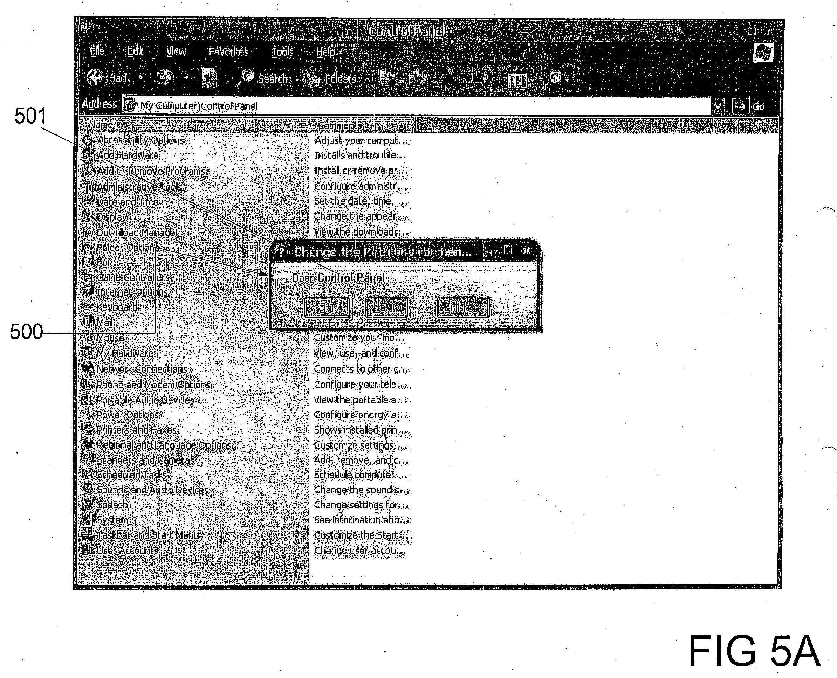

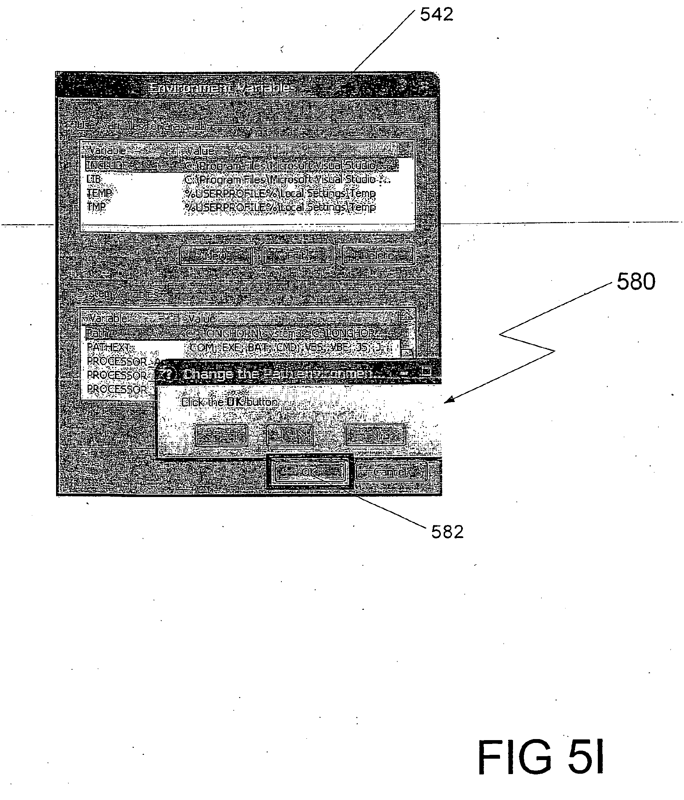

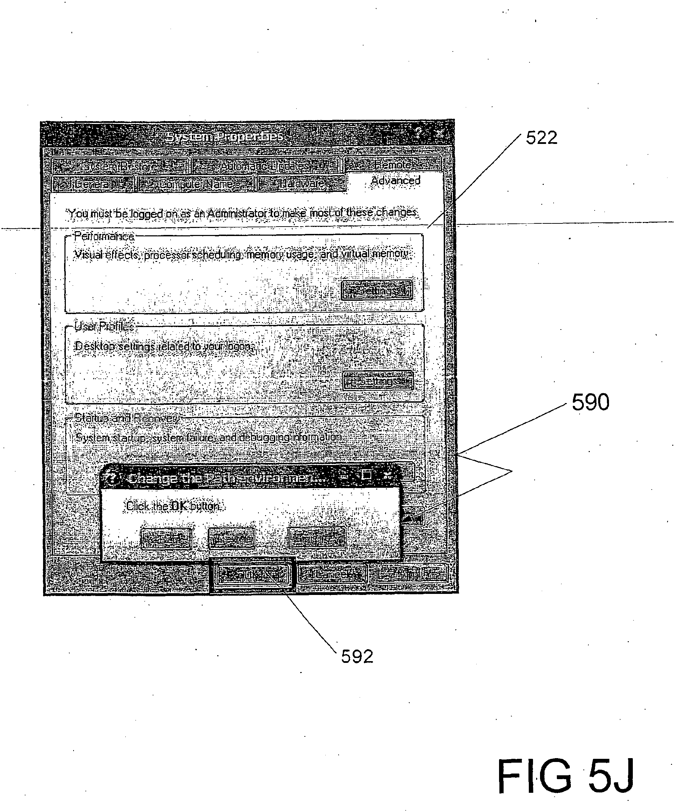

FIGS. 5A - 5J illustrate representative screen shots of the steps represented in an ACW script 211 and executed by system 200 in performing a task corresponding to a user command 206 "Edit the path variable".

The set of screen shots in FIGS. 5A-5J show the ACW Interpreter 230 executing the series of atomic steps required to complete the task "Edit the path variable". The interpreter 230 executes each step and only pauses when user input is required.

FIG. 5A shows the first step of the illustrative sequence in window 500. The action shown is to "open the control panel". The part of the ACW script that corresponds to this step is detailed below: 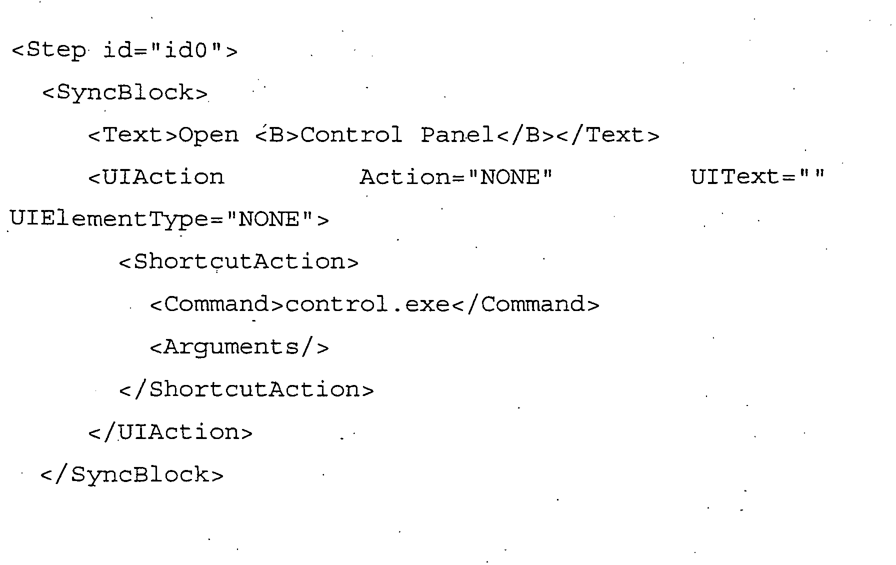 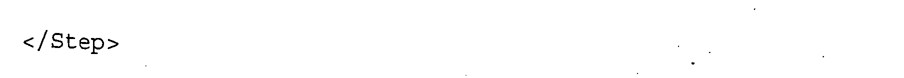 The text 501 to display in window 500 is "Open Control Panel". The ACW Interpreter 230 executes this step by executing a shortcut called control.exe, and displays the control panel window under window 500 as shown in FIG. 5A.

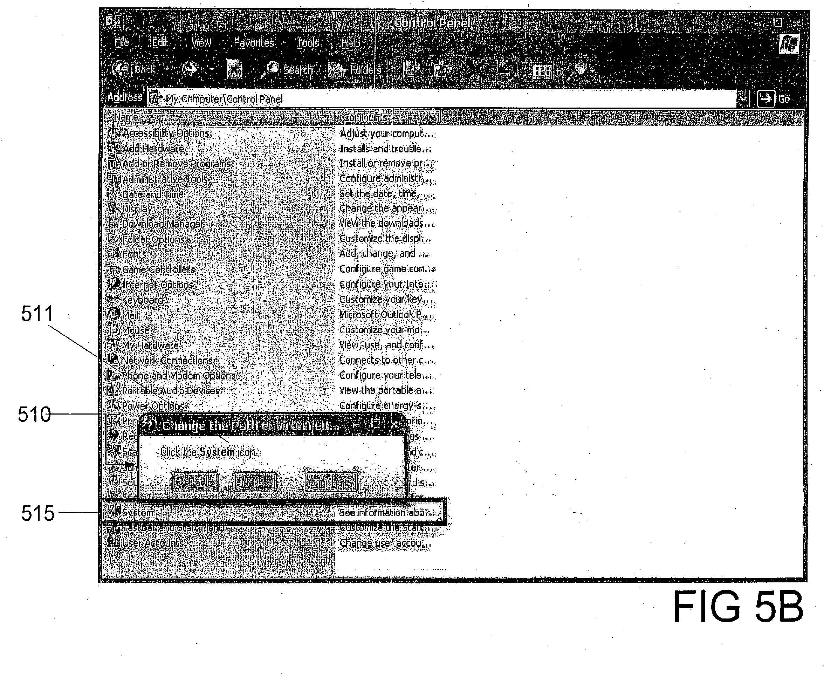

FIG. 5B illustrates the second step in the sequence of atomic steps. The action illustrated in window 510 is to "Click the system icon" on the control panel. The part of the ACW script that corresponds to this step is detailed below. 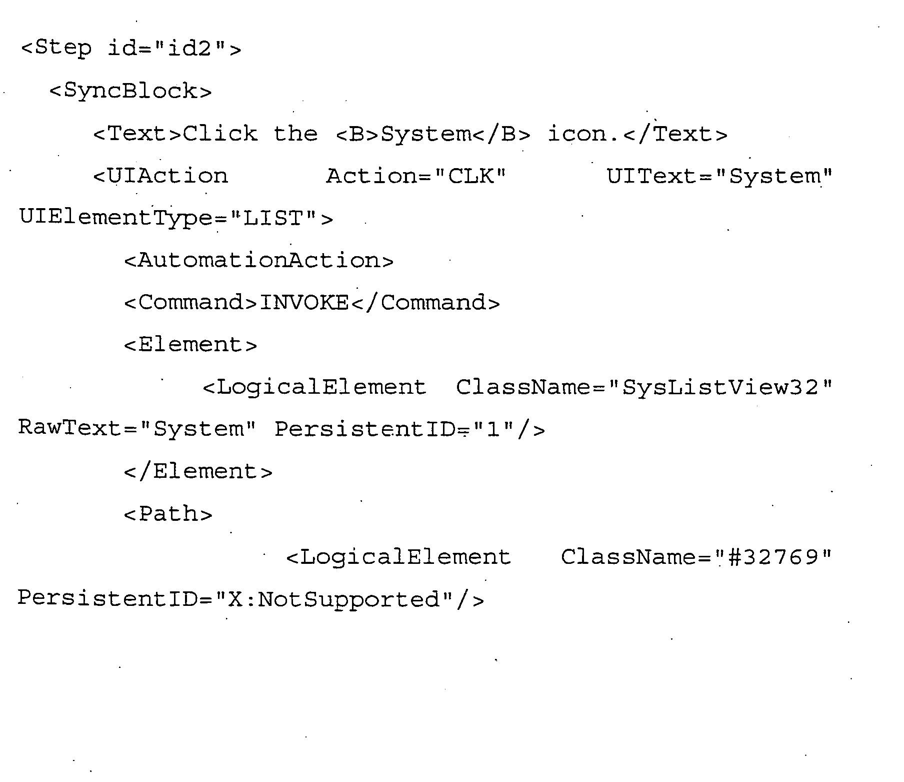 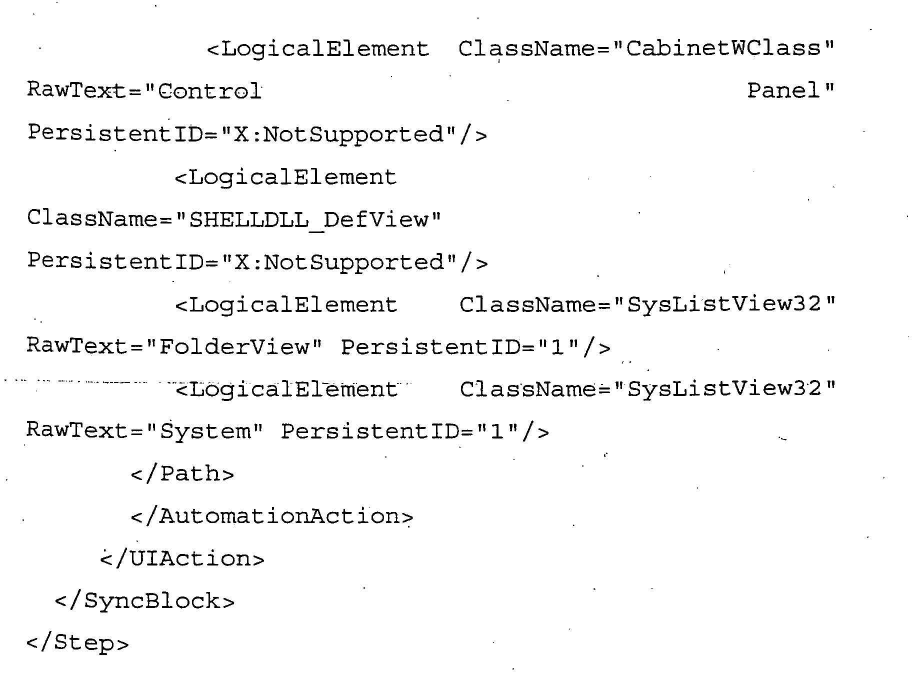 The text 511 to display in window 510 is "Click the System icon". The ACW Interpreter 230 finds the System icon 515 on the control panel window using the Path information contained in the script file. The Path information is used by the ACW Interpreter to programmatically locate the icon on the screen using some GUI automation technology (E.g. Windows UI Automation). When ACW Interpreter 230 finds the icon, the interpreter calls the "invoke" method on the icon (using Windows UI Automation) to click it.

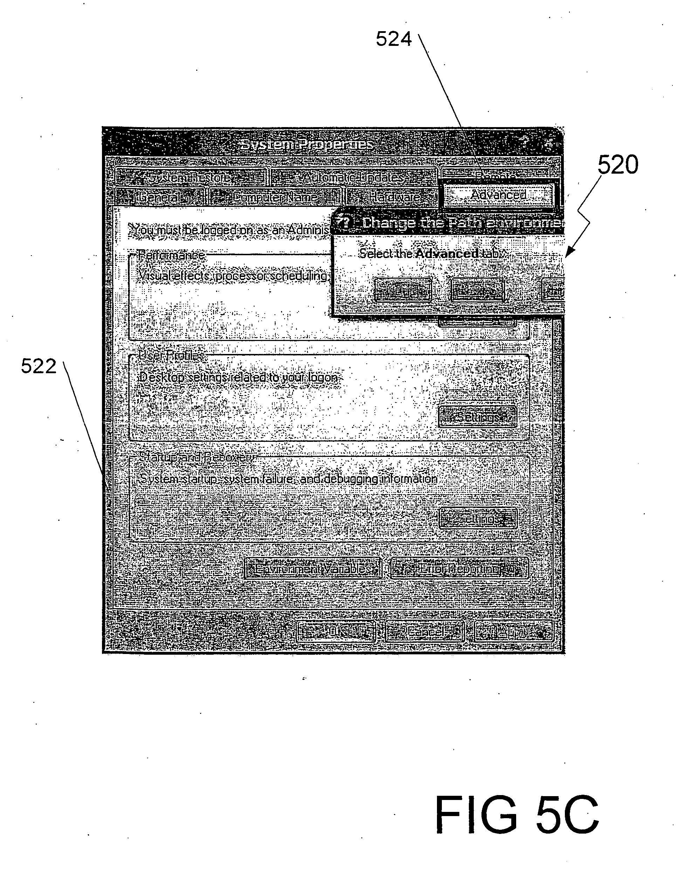

FIG. 5C-5F show the progression of the atomic steps of the task by the ACW Interpreter 230.

In FIG. 5C, system 200 has opened a window 522 containing the information in the system menu 515 highlighted in FIG. 5B. FIG. 5C illustrates the next atomic step in the sequence required for the task. Window 520 is presented on the graphical user interface and instructs the user to click on the **Advanced** tab in window 522. At the same time the ACW Interpreter 230 locates the **Advanced** tab 524 in window 522, and highlights it. System 200 then executes a click command (again by calling the "invoke" method) on the **Advanced** tab causing window 520 to display the options available to the user under the Advanced tab.

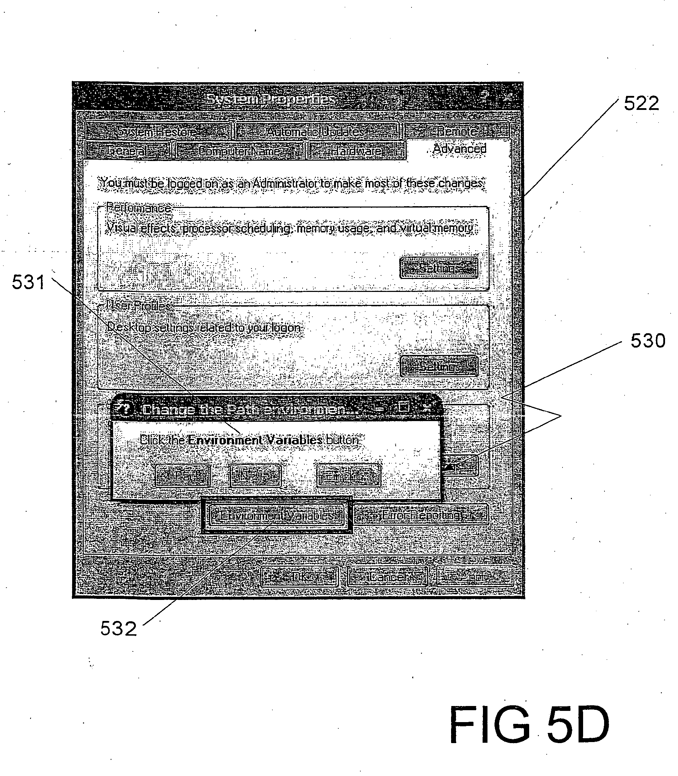

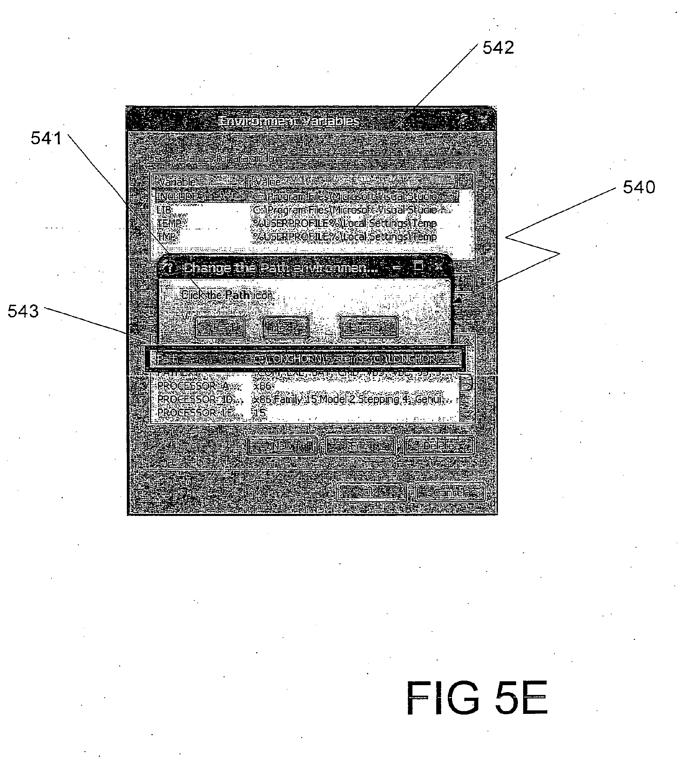

In FIG. 5D, system 20'0 opens window 530 on the graphical user interface and displays the instructions for this step to the user. Window 530 contains the instructions for the user to execute this step by displaying text 531 instructing the user to "Click on the **Environment Variables** button" 532. At the same time ACW interpreter 230 locates the Environment Variables button 532 on window 522 and highlights button 532 on the GUI. System 200 then executes a click command on the **Environment Variables** button 532 causing window 542 to open as illustrated in FIG. 5E.

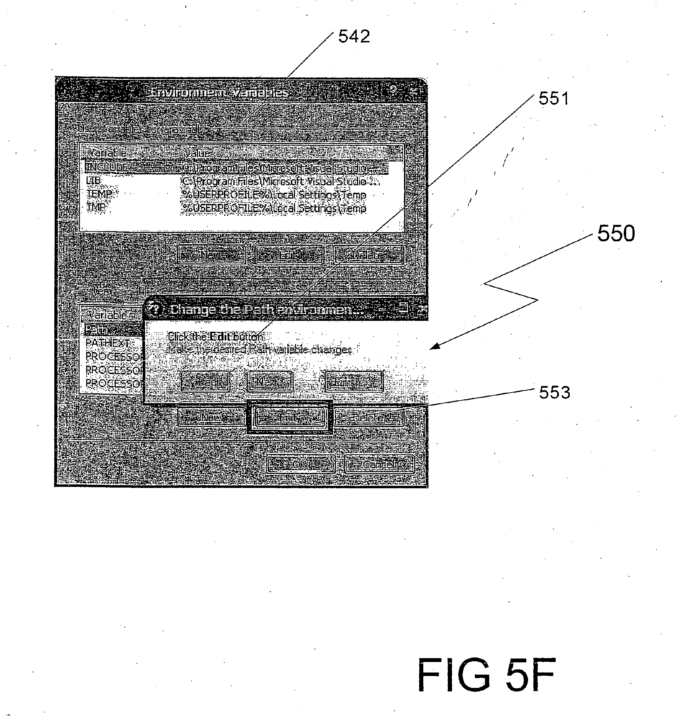

As there are additional steps required to complete the task, system 200 displays to the user the next set of instructions in window 540. Window 540 instructs the user to "Click on the Path icon" 541. At the same time the ACW interpreter 230 locates the Path icon 543 on window 542 and highlights it for the user. System 200 then executes a click command on path icon 543 causing window 550 to appear as illustrated in FIG. 5F.

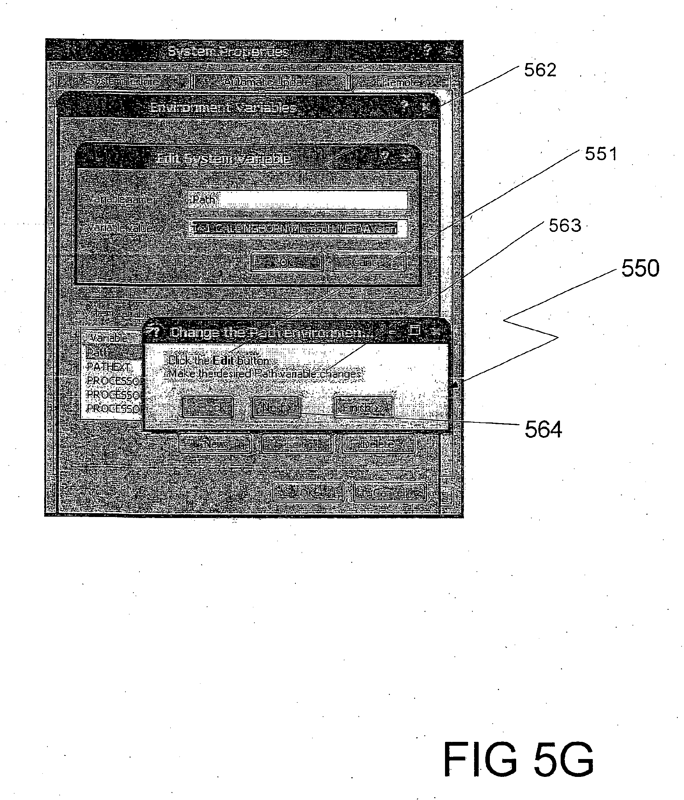

The user is again presented with instructions to complete this next step in the sequence of atomic steps. Window 550 instructs the user to click on the Edit button 553 through text 551. At the same time ACW Interpreter 230 locates the edit button 553 on window 542 and highlights the edit button 553 on the GUI. System 200 then executes a click command clicking edit button 553, which causes window 562 to open as illustrated in FIG. 5G.

FIG. 5G shows a step in the task that requires user input. In this step, the user is required to make changes to the path variable. This information is present in a box. When the user is finished, the user has to press the Next button 564 in window 550 for the ACW Interpreter to continue executing the necessary steps in the wizard. The corresponding part of the ACW script in one embodiment of the present invention is shown below. 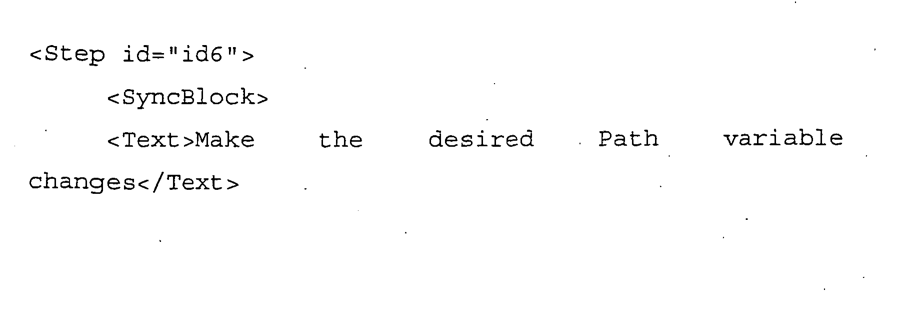 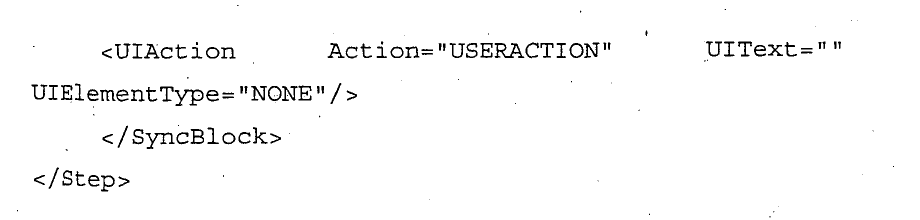 The action is listed as a USERACTION which lets the ACW Interpreter know that user input is,expected in this step, and that it cannot proceed till the user finishes.

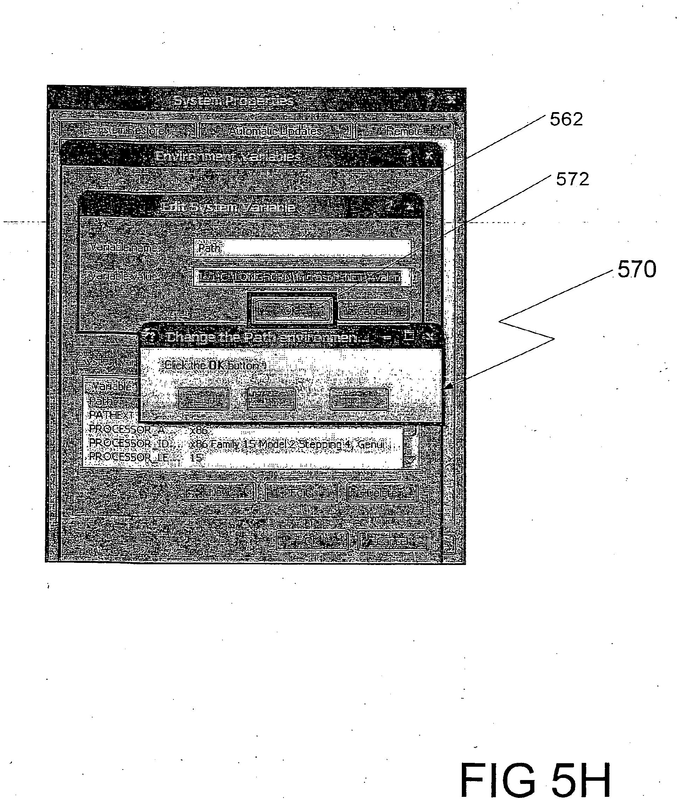

Window 550 changes to highlight a second instruction 563 to the user. This instruction instructs the user to make desired changes to the path. As this step requires user input system 200 does not advance until the user enters the desired information and clicks **Next**. Then system 200 causes window 570 to open instructing the user to click the "OK" button 572. At the same time the ACW Interpreter 230 locates and highlights button 572 on window 562, as illustrated in FIG. 5H.

FIGS. 5I and 5J illustrate the steps required to complete the desired task. Following the clicking of the "OK" button 572 in FIG. 5H, system 200 and ACW Interpreter 230 display to the user instructions to click the "OK" buttons 582 and 592 in windows 580 and 590 respectively and highlights this button on the respective window 542 and 522. Once all the atomic steps are completed system 200 returns to a stand by state to await another user command 206.

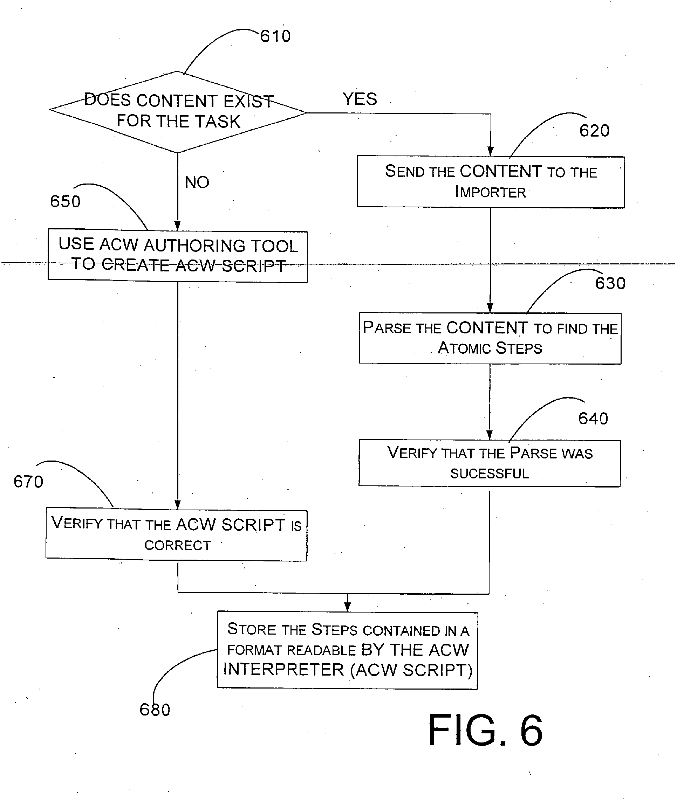

FIG. 6 illustrates a flow diagram for creating an ACW script for a specific task. At 610, an author determines whether content exists for the relevant task. Examples of this content can include HELP documents, KB articles, newsgroup posts etc. If the document for the task already exists, the author provides the document to an importer at 620. The importer is configured to parse the document to identify the atomic steps contained therein, and to convert those instructions contained in the document to an ACW script that can be executed by the ACW Interpreter 230. The number of steps that can be parsed correctly depends on the structure of the file. HELP files usually have clues in their structure. For example, text that appears in the GUI is frequently in a bold format. Such clues can be used in parsing.

At step 630, assuming the selected task is in a HELP document, the HELP document is parsed by the importer in order to identify the HELP document's component atomic steps, as well as the order of those atomic steps. In one embodiment, the importer parses the help document to identify key words in the HELP document such as "click", "tab", "button", "menu", etc. words that are in bold type in the text of the HELP document. These key words are converted into commands that are executable by the ACW Interpreter 230. However, other methods of parsing the task can also be used.

At step 640, the author analyzes whether the parsed document was successfully converted to an ACW script. The author can use any known method for checking the hypothesized parse. If the parse was unsuccessful the author then corrects errors in parsing, and can author parts of the script that the importer couldn't parse. These steps do not form a part of this invention and can be performed as desired.

If the author, at 610, determines that there is no existing content for the required task, the author will create a new ACW script for the task using an ACW task-authoring environment this authorizing is indicated by step 650. In one embodiment the authoring tool is a macro recorder that records the steps that the author performs against the GUI in performing the task, and outputs an ACW script that describes the steps performed to complete this task.

At 670, the author can verify that the generated ACW script is accurate. This step can be a manual or automatic verification of the ACW script to ensure that a minimal number of errors are transferred to the final product. For example, if the ACW script has a spelling mistake the ACW Interpreter 230 cannot find that element and this error is highlighted to the author.

Following either step 670 or 640, the finished ACW script is stored in a script database at step 680. By integrating the task authoring into the authoring of HELP/KB article content, the cost of authoring tasks/wizards is greatly reduced.

Although the present invention has been described with reference to particular embodiments, workers skilled in the art will recognize that changes may be made in form and detail without departing from the spirit and scope of the invention.

## Claims

1. A method of executing a task on a computer system having a graphical user interface (GUI), comprising the steps of:
receiving a command from a user indicative of a task to be executed;
identifying a task, having a plurality of subtasks and a task order, in a task database that matches the command from the user;
executing each of the plurality of subtasks in task order using a module of the computer system; and
displaying each subtask of the task to the user on the GUI.

2. The method of claim 1 further comprising the steps of:
highlighting each step on the GUI as the subtask is executed; and
providing a window on the GUI describing the subtask being executed.

3. The method of claim 2 further comprising the steps of:
receiving an indication from the user prior to advancing to a next subtask; and
advancing to the next subtask in the task order.

4. The method of claim 3 wherein the and further comprising:
providing a window having instructions for the user in natural language.

5. The method of claim 4 further comprising the steps of:
automatically detecting a current state of the computer system; and
displaying in the window options to the user based on the detected state.

6. The method of claim 4 further comprising the step of:
presenting to the user a dialogue window containing information useful in determining which option to choose when multiple options are presented to the user.

7. A method for automatically executing a graphical user interface (GUI) task in a computer system, comprising the steps of:
receiving a user input indicative of a desired task;
identifying a selected task in a database, based on the user input, each task in the database comprising a plurality of subtasks; and
programmatically executing each of the plurality of subtasks corresponding to the selected task.

8. The method of claim 7 wherein programmatically executing the subtasks comprises invoking a GUI automation component.

9. The method of claim 8 wherein the computer system includes an existing GUI component and wherein invoking the GUI automation component comprises:
automatically performing the subtasks against the GUI component with the GUI automation component.

10. The method of claim 7 wherein programmatically executing further comprises:
parsing the selected task to identify the plurality of subtasks corresponding to the' selected task.

11. The method of claim 7 wherein programmatically executing further comprises:
providing to the user an indication of each of the plurality of subtasks as each subtask is executed.

12. The method of claim 7 wherein programmatically executing further comprises:
waiting for an indication from the user prior to executing a next one of the plurality of subtasks.

13. The method of claim 12 wherein programmatically executing further comprises:
receiving the indication from the user; and
executing the next one of the plurality of subtasks.

14. The method of claim 7 wherein programmatically executing further comprises:
when one of the plurality of subtasks requires a further user input, providing to the user an indication of the further user input required.

15. The method of claim 14 wherein executing further comprises:
receiving from the user the further input for the subtask; and
advancing to a next one of the plurality of subtasks.

16. The method of claim 7 wherein the database is a database containing HELP documents associated with an application program.

17. The method of claim 7 wherein the database is a database containing documents associated with trouble-shooting an application.

18. A computer readable medium containing computer executable instructions that when executed cause a computer to perform the steps of:
receiving from a user an input indicative of a desired task;
identifying a selected task to be executed against a graphical user interface (GUI) having a plurality of subtasks and being stored in a database; and
programmatically executing the plurality of subtasks corresponding to the selected task against the GUI.

19. The computer readable medium of claim 18 wherein programmatically executing comprises:
executing the received plurality of subtasks with a GUI automation module.

20. The computer readable medium of claim 18 further containing instructions to perform the steps of:
parsing the selected task to identify the plurality of subtasks for the selected task.

21. The computer readable medium of claim 18 further containing instructions to perform the steps of:
displaying on a display device each of the plurality of subtasks as the subtask is executed.

22. The computer readable medium of claim 21 further containing instructions to perform the steps of:
waiting for an indication from the user prior to executing a subsequent subtask;
receiving the indication from the user; and
executing the subsequent subtask.

23. The computer readable medium of claim 18 further containing instructions to perform the steps of:
when one of the plurality of subtasks requires a user input, displaying on a display device a window associated with the subtask;
receiving the required input from the user; and
executing the subtask.

24. A method of configuring a HELP file that includes when displayed, a plurality of human readable subtasks required to be performed against a graphical user interface (GUI) to perform a task such that the HELP file can be executed by a computer, comprising:
identifying the plurality of subtasks corresponding to each task in the HELP file;
including in the HELP file the plurality of subtasks in a computer executable format.

25. The method of claim 24 wherein the including step further comprises the step of:
storing the plurality of computer executable subtasks as an additional portion of the HELP file.

26. The method of claim 24 wherein the storing step stores the plurality of computer executable subtasks as a separate file, and further comprising the step of:
storing a pointer in the HELP file pointing to the separate file.

27. The method of claim 24 wherein including in the HELP file further comprises:
writing a structured representation of the help file while authoring a plurality of instructions that are displayed to a user.

28. A data structure representing a task executable on a computer against a graphical user interface (GUI), comprising:
a written description of a plurality of subtasks to be executed to complete the task, and
a set of computer executable instructions which, when executed, programmatically execute the plurality of subtasks of the written description against the GUI.

29. The data structure of claim 28 wherein the computer executable instructions are stored in a file containing the written description.

30. The data structure of claim 20 wherein the written description and the computer executable instructions are stored in separate files, and the file containing the written description contains a pointer pointing to the file containing the computer executable instructions.
